# EUROPEAN PATENT APPLICATION

(11) **EP 4 106 247 A1**
(43) Date of publication of application: **21.12.2022**
(21) Application number: 21192544.1
(22) Date of filing: 23.08.2021
(51) Int. Cl.: H04L 5/00, H04B 1/7163, H04L 1/00, H04W 72/00

(54) **DATA TRANSFER WITHIN UWB RANGING**

(30) Priority: 17.06.2021 IN 202111026600
(71) Applicant: NXP B.V., 5656 AG Eindhoven (NL)
(72) Inventor: Subraveti, Diwakar, 5656AG Eindhoven (NL); Vadakkan, Nidhin, 5656AG Eindhoven (NL); Rajaram, Atmaram Kota, 5656AG Eindhoven (NL); Jampale, Ajay A, 5656AG Eindhoven (NL)
(74) Representative: Hardingham, Christopher Mark

(57) **Abstract**

Disclosed are methods for a controller to exchange data with a controlee during ultra-wideband, UWB, ranging having a beacon interval defined by periodic beacon transmissions from the controller, wherein each beacon interval comprises a beacon transmission and a ranging period, the methods comprising: adapting the beacon transmission from the controller, to repurpose one or more slots in a subsequent ranging period, by transmitting a data control information element, and a one of transmitting or receiving the data during the repurposed one or more slots. Methods for the controlee, and the system are also disclosed, as are corresponding controllers and controlees.

## Description

### Field

The present disclosure relates to Ultra-wideband, UWB, ranging. More particularly it relates to methods to allow data transfer during UWB ranging.

### Background

Ultra-wideband, UWB, radio, also referred to as impulse radio, is becoming of increasing interest for determining the distance between two devices. Such determination is generally referred to as UWB ranging. Various methods and protocols have been developed to implement UWB ranging; generally they involve determining a time-of-flight, of a UWB radio transmission between two devices; typically this is carried out using a "there and back" technique which may allow for variation between clocks of the two devices. Protocols, such as IEEE 802.15.4z have been and are being developed to standardise such UWB ranging. In general, the ranging protocols include allocating a first device as the controller and a second device as the controlee. The controller transmits a ranging beacon at the start of a periodic interval, which is known as the beacon interval. Although the IEEE 802.15.4z protocol allows various options, in general the ranging beacon is followed by two sub-intervals, termed the ranging management period, or RMP, and the ranging period, RP respectively. Although the protocols provide for some ranging-related messages to transfer, such as Ranging Control Message, Ranging Initiation Message, Ranging Response Message all as defined in section 6.9.7 Multimode ranging of the IEEE 802.15.4z-2020 standard specification, there is in general no provision for unrestricted data transfer between the devices.

### Summary

According to a first aspect of the present disclosure, there is provided a method for a controller to exchange data with a controlee during ultra-wideband, UWB, ranging having a beacon interval defined by periodic beacon transmissions from the controller, wherein each beacon interval comprises a beacon transmission and a ranging period, the method comprising: adapting the beacon transmission from the controller, to repurpose one or more slots in a subsequent ranging period, by transmitting a data control information element, and a one of transmitting or receiving the data during the repurposed one or more slots. Thus, according to this aspect, the method may be implemented entirely within the controller. The disclosure extends to corresponding methods which are implemented across the controller and the controlee and thus include receiving the data by the controlee, as well as receiving the search control information element as part of the adapted beacon transmission. By refocusing or reallocating one or more slots within a ranging round, and in particular within a contention free period, the method allows transfer of data within a ranging activity, without having to interrupt the ranging or provide conflicting transmissions.

In one or more embodiments, the subsequent ranging period is within the same beacon interval as the beacon transmission. Thus data may be transferred promptly after notification by the controller that the data is awaiting transfer. The data may be transferred over a single beacon interval, or may be transferred, particularly for larger volumes of data, over multiple beacon intervals.

In one or more embodiments the data exchange is a data transfer from the controller to the controlee, and the method comprises transmitting the data by the controller. Corresponding methods also covered by the present disclosure encompass receiving the data by the controlee.

In one or more other embodiments the data exchange is a data transfer from the controlee to the controller and the method comprises receiving the data, wherein each beacon interval further comprises a ranging management period, the method further comprising the controller receiving a data request information element during a ranging management period within a prior beacon interval, wherein the controller transmits the data control information element, during a first beacon transmission subsequent to receiving the data request. Such methods enable the controlee to provide a notification to the controller that it has data awaiting to be transferred.

In one or more such embodiments the ranging management period comprises a contention access period and a contention free period, and the data request information element is received during the contention access period.

In one or more embodiments the data request information element indicates the number of slots required for data transfer. The number of slots required for data transfer may correspond to the entirety of the data to be transferred. The number of slots required may be less than, equal to, or more than the number of slots in a single broadcast interval which may be made available by the controller. The subsequent ranging contention free period may be within an immediate subsequent beacon interval, thus providing for prompt data transfer. The data may be transferred entirely within the beacon interval, or, particularly for larger amounts of data, the data may be transferred over multiple beacon intervals.

According to one or more embodiments, the data control information element comprises: an indication of the starting slot for the data transfer, and an indication of the number of slots for the data transfer. The starting slot for the transfer may refer to a slot number within a specific contention free period, which may be predetermined or may be included as a separate part of the data control information element. It may be referenced to the beginning of a beacon interval.

In one or more embodiments the data control information element further comprises: an address of the controlee, and an indication of the direction of the data transfer between the controller and controlee. Providing the address of the controlee may be useful in circumstances where a controller is communicating, or able to communicate, with multiple controlees, at the same time, such as when there are multiple devices present.

In one or more embodiments, the method further comprises allocating slots in a ranging contention free period within each subsequent beacon intervals, corresponding to the repurposed one or more slots, for transferring data. This is particularly useful for the transfer of larger volumes amounts of data, which may not be capable of being transferred within a single beacon interval. By providing that corresponding slots in subsequent ranging contention free period or ranging period are also allocated states transfer, higher volumes the data may be efficiently transfer. It will be appreciated that the data control information element may enable deallocation of the slots such that, in the future beacon intervals after deallocation, the slots are available for ranging rounds.

In one or more embodiments, the method of comprises, in response to the one of transmitting or receiving the data during the repurposed one or more slots, respectively receiving or transmitting an acknowledgement. An acknowledgements policy may be preestablished in order to determine whether or not to acknowledge receipt states, and if so how to do so. In particular, respectively receiving or transmitting and acknowledgement may be within the one or more slots. Thus, acknowledgement may be immediate, and within the same slot. Alternatively, an enhanced acknowledgement may be established under which the timing of the acknowledgement is predetermined but not necessarily immediate. The latter may provide for fragmented data transmission across multiple slots and even may provide for data transmission across multiple beacon intervals.

According to a second aspect of the present disclosure, there is provided a UWB controller configured for ultra-wideband, UWB, ranging during periodic beacon intervals each comprising a beacon transmission and a subsequent ranging period, by transmitting the beacon transmission, and transmitting and receiving ranging communications during the subsequent ranging period, the controller configured to transfer data to a controlee by: adapting the beacon transmission, to repurpose one or more slots in the subsequent ranging period, and transferring the data during the repurposed one or more slots.

In one or more embodiments, the controller is configured to adapt the beacon transmission by including a data control information element. Transferring the data may comprise a one of transmitting the data and receiving the data. In one or more embodiments, transferring the data comprises receiving the data, and the controller is further configured to receive a data request information element during a ranging management period within a prior beacon interval.

According to a yet further aspect of the present disclosure, there is provided a UWB controlee configured for ultra-wideband, UWB, ranging during periodic beacon intervals each comprising a beacon transmission and a subsequent ranging period, by receiving the beacon transmission, and transmitting and receiving ranging communications during the subsequent ranging period, the controlee configured to transfer data to or from a controller by: receiving and beacon transmission which has been adapted to repurpose one or more slots in the subsequent ranging period, and receiving or transmitting the data during the repurposed one or more slots

In one more embodiments, the controlee is configured to receive the beacon transmission which includes a data control information element. Transferring the data may comprise a one of transmitting the data and receiving the data. In one or more embodiments, transferring the data comprises transmitting the data, and the controlee is further configured to transmit a data request information element during a ranging management period within a prior beacon interval, in order to indicate to the controller that it has data awaiting transfer..

There may be provided a computer program, which when run on a computer, causes the computer to configure any apparatus, including a circuit, controller, sensor, filter, or device disclosed herein or perform any method disclosed herein. The computer program may be a software implementation, and the computer may be considered as any appropriate hardware, including a digital signal processor, a microcontroller, and an implementation in read only memory (ROM), erasable programmable read only memory (EPROM) or electronically erasable programmable read only memory (EEPROM), as non-limiting examples. The software implementation may be an assembly program.

The computer program may be provided on a computer readable medium, which may be a physical computer readable medium, such as a disc or a memory device, or may be embodied as another non-transient signal.

These and other aspects of the invention will be apparent from, and elucidated with reference to, the embodiments described hereinafter.

### Brief description of Drawings

Embodiments will be described, by way of example only, with reference to the drawings, in which
figures 1A, 1B, 1C, 1D and 1E show, schematically, various configurations of time or slot allocations within a beacon interval used in UWB ranging;
figures 2A, 2B, 2C and 2D show, schematically, various configurations of time or slot allocations within a ranging management period 130 as depicted in figures 1A to 1E;
figures 3A, 3B and 3C show, schematically, various configurations of time or slot allocations within a ranging period 140 as depicted in figures 1A to 1E, according to conventional UWB ranging;
figures 4A, 4B and 4C show, schematically, various configurations of time or slot allocations within a ranging period 140 as depicted in figures 1A to 1E, according to one or more embodiments of the present disclosure;
figure 5 shows an example bit allocation of a data control information element;
figure 6 shows an example bit allocation of a data request information element;
figure 7 shows a flow diagram of a method according to one or more embodiments of the present disclosure; and
figure 8 shows a flow diagram of another method according to one or more other embodiments.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments

### Detailed description of embodiments

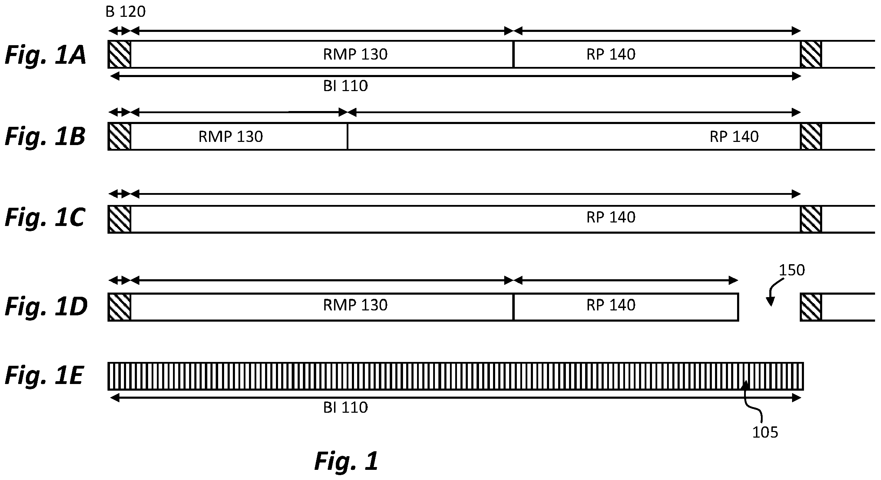

Figures 1A through 1E shows, in schematic form, the overall structure of UWB ranging in accordance with IEEE 802.15.4, according to various options allowed under the protocol. Considering first figure 1A this shows the communications structure having beacons, B, 120, which repeat periodically with a beacon interval, BI, 110. In each beacon interval 110, the beacon 120 is followed by a ranging management period, RMP, 130, which is followed by a ranging period 140. As shown in figure 1A, the ranging management period together with the messaging period may fill the complete time interval between successive beacons 120.

Figure 1B shows a similar structure to that in figure 1A, that is to say a beacon interval BI 110 which commences with a beacon 120 followed by a ranging management period 130 and a ranging period 140, which together sell the entire beacon interval 110. However, in this example the ranging management period 130 is shorter than that shown in the example of figure 1A, which in turn leaves more of the ranging interval available for ranging period 140. A longer ranging period 140 may provide for more ranging rounds.

Figure 1C shows a third possible structure for the ranging. In this example, a ranging management period 130 is not present, which leaves the maximum possible time for ranging period 140. As will be appreciated, omitting a ranging management period 130 entirely limits the types of communication between the control or controlee such that the example in figure 1C is typically applied only in specific circumstances, such as to only ranging.

Although in the examples shown in figures 1A, 1B and 1C, the ranging management period 130 and ranging period 140 occupy the complete time interval between beacons 120, this is not mandatory. An example in which the ranging management period 130 and ranging period 140 do not fill the complete time is shown in figure 1D. In this example the ranging management period 130 follows immediately after the beacon, and is itself followed immediately by the ranging period 140. However, at the conclusion of the ranging period 140 there is a gap 150 prior to the next ranging beacon.

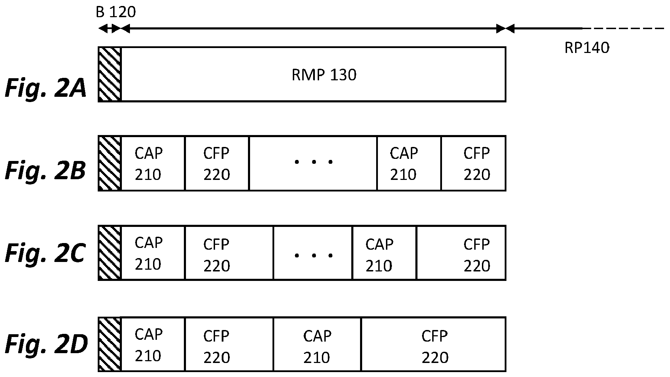

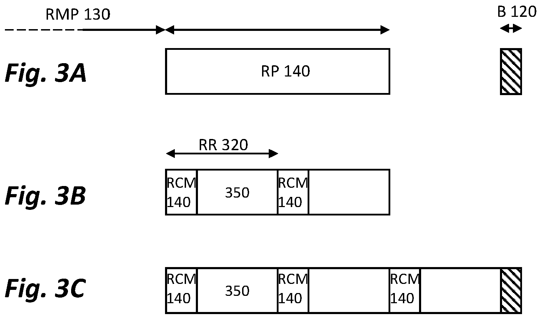

Finally, figure 1E shows that the beacon interval 110 may be divided into a finite number of slots 105, which are generally referred to as "ranging slots". According to the protocol, a slot 105 may be considered as a single unit of data or time, for at least the ranging period, and have a duration which is an integer multiple of the "RSTU" (ranging scheduling time unit) which is a fundamental time unit used in UWB ranging. A "slot", or "ranging slot", accounts for the duration of the UWB packet and also the processing time needed by the devices Since the length of the UWB packets vary according to the configuration of the PHY (physical layer) frame format such as the preamble length, data rate, the slot duration, and also the fact that the processing time varies from device to device, the slot length can be agreed between the devices during the signalling phase or by out of band means. The slot length should be an integer multiple of the RSTU. Each of the beacon 120, ranging management period 130 and ranging period 140 occupy a multiple number of slots. As shown in figures 1A through 1D, in this instance the beacon is shown as occupying 4 slots, for illustrative purposes only; in practice the beacon may typically have a duration of a few 10s of slots. As will be shown in more detail with respect to figure 2 and 3, each of the ranging management period 130 and ranging period 140 may be broken down into sub intervals, each of which also occupies an integral number of slots.

The content of individual transmissions such as the beacon transmission are, in general, determined according to internationally agreed standards such as IEEE 802.15.4 and include one or more so-called "information elements" determined according to the standard. The order and sequence of these information elements is generally determined by the standard.

Turning now to figure 2A to 2D, these show potential configurations of the ranging management period 130 within a beacon interval 110. At figure 2A is shown the ranging management period as a single unit; the figures 2B to 2D show various options for the internal configuration of the ranging message period. The ranging management period comprises one or more so-called "contention access periods" CAP, also referred to as a ranging contention access period RCAP, 210 each of which is followed by a "contention free period" CFP, also referred to as a ranging contention free period RCFP, 220. In general, each contention access period is followed by a corresponding contention free period. As shown in the configuration of figure 2B, the contention access period 210 and contention free period 220 in each pair may each be of the same duration, and each pair of CAP and CFP may have the same duration. In alternative configurations, such as that shown in figure 2C, the CAP period 210 may have a different duration from the CFP period 220 within each pair, but these durations may be repeated across multiple pairs. Yet further, as shown in figure 2D, the duration of the CAP period 210 CFP period 220 may differ, and the durations of the pairs may differ such as 42 pairs are shown. The skilled person familiar with UWB protocols will appreciate that other possibilities are also not excluded.

Turning now to figures 3A to 3C, these show possible configurations of the ranging period 140. As shown at figure 3A, the ranging period 140 might not occupy the entire gap between the end of the ranging management period 130 and the subsequent beacon 120. Alternatively, as is the case in figure 3C, the ranging period 140 may occupy the entire gap. Figure 3B shows a ranging period 140 which comprises two ranging rounds, RR, 320. Each ranging round 320 comprises a first part which is allocated to a ranging control message 140, followed by a second part 350 during which transmissions may be made by the controller and one of more controlees to implement the ranging. The precise configuration of these transmissions will be familiar to the skilled person, but they are not of significance to the present disclosure and so will not be considered further herein.

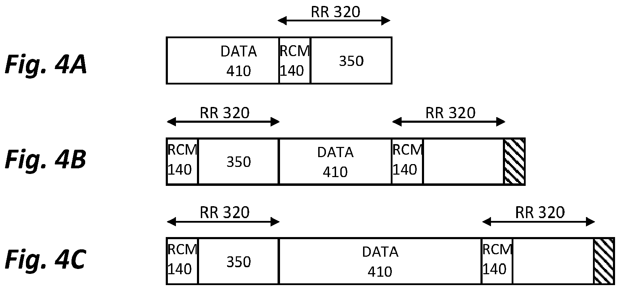

Figures 4A and 4B illustrate embodiments according to the present disclosure, in which one or more ranging rounds is replaced by data transfer slots, shown at 410. As will be described in more detail hereinunder, the data transfer implemented in the data transfer slots 410 may be either from the controller to the controlee or from the controlee to the controller; irrespective of the direction of the data transfer, in common is the fact that a ranging round 320 is replaced by a data transfer.

As has already mentioned, existing methods for UWB ranging in general do not allow for unrestricted data transfer. It will be appreciated that as used herein "data" is used in a sense to refer to any information, which is not part of the ranging process. That is to say, data may exclude control information and control messaging for the ranging process itself, ranging cryptographic keys for the ranging, timestamp information, etc.

As shown in figure 4A, data transfer slots 410 may precede a ranging round 320. Alternatively, shown in figure 4B, data transfer slots 410 may follow one or more ranging round 320. Furthermore, the data transfer slots 410 may be followed by one or more further ranging round 320. As shown in figure 4A and figure 4B, the duration of the data transfer interval, corresponding to the number of slots in the data transfer interval, may be equal to the number of slots required for a ranging round including the ranging control message 140. Alternatively, as shown in figure 4C the duration of the data transfer interval may be longer than a ranging round 320; that is to say it may have more slots than a ranging round 320. Alternatively, the duration of the data transfer interval may be shorter than a ranging round 320; that say it has it may have fewer slots than a ranging round 320.

Thus, according to the present disclosure, data is transferred during one or more repurposed slots.

Prior to the data transfer, both the controller or and controlee require to be aware that one or more of the slots which would otherwise be used for a ranging round are to be made available for the data transfer. In order to ensure that this is the case, a one of the controller and controlee adapts messaging during a respective one of the beacon transmission (from the controller) and a contention access period within a ranging management period, subsequent to the beacon transmission and prior to the ranging period (from the controlee), to re-purpose one or more slots in a subsequent ranging contention free period, for transferring the data.

This will now be described in more detail, considering first the case where the data transfer is from the controller to the controlee, and then considering the case where the data transfer is from the controlee to the controller.

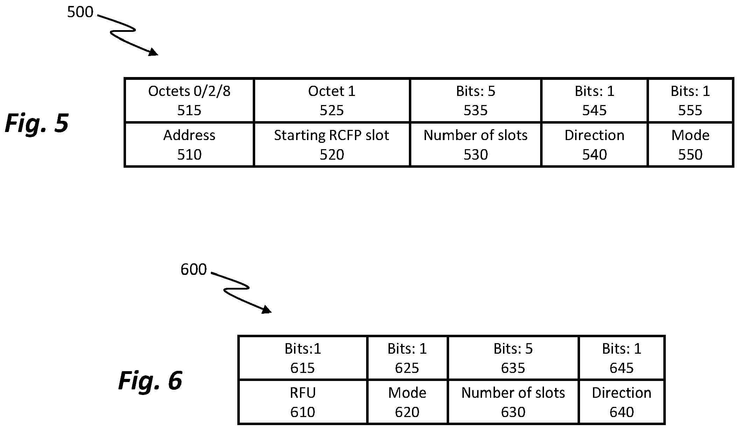

The case where the data transfers from the controller to the controlee is, in principle, simpler, since the controller is able to allocate slots in the ranging period. In conventional ranging systems, the controller allocates slots within the ranging period to specific ranging rounds. In embodiments of the present disclosure, the controller allocates slots to the data transfer, and supplies this information to the controlee using an Information Element which may be referred to as a "Data Control Information Element". The data control information element 500 may take the format illustrated in figure 5. In particular it specifies an "address" 510, being the address of the device which is to receive the control information - which in this case will be the controlee for receiving the data transfer; it indicates the "starting RCFP slot" 520, that is to say the slot number relative to the start of the beacon interval. Furthermore it indicates the "number of slots", 530, that is to say the number of slots required for the data transfer; it also indicates a direction 540, either uplink and downlink: in the case of data transfer from the controller to the controlee, the direction is a downlink; finally it indicates a "mode" 550, as either allocate of de-allocate: this enables the data control information element to allocate the slots the data transfer, but also to delay the allocate the slots when no longer required for data transfer.

Figure 5 also indicates the number of bits or octets required for each component of the data control information element according to one embodiment. It will be appreciated that in other embodiments, different number of bits or octets may be applicable to one or more components of the data control information element. In the embodiment shown in figure 5, the address of the recipient device occupies three octets 515 (numbers 0, 2, and 8); the starting slots 520 occupies 1 octet 525 (number 1); the number of slots occupies 5 bits 535; and each of the direction and mode may be indicated by a single bit, respectively 545 and 555.

"Mode" will now be defined: in the case of data transfer from the controller to the controlee, this data control information element is transmitted from the controller to the controlee during a beacon transmission at the start of a beacon interval, that is to say, the controller adapts messaging during the beacon transmission. And as already indicated, the component indicating the direction is set to downlink. Once the data control information element has been transmitted, the controlee will be able to receive transfer data, even during the same beacon interval. The corresponding slot during subsequent beacon intervals will also be reserved for, that is to say, allocated to, data transfer. By providing a "mode" bit 550, the slots may be deallocated for future beacon intervals, once the data transfer is complete, by transmitting, in beacon transmission subsequent to completion of the data transfer, a corresponding access control information element, in which the mode bit 550 is set to "de-allocate".

The data control information element includes a bit 540 indicating the direction of data transfer: the same data control information element can be used in order to initiate data transfer from the controlee to the control, a setting this bit to "uplink". However, in the case of data transfer from the controlee to the controller, the controlee must communicate to the controller that data transfer is required, in order for the controller to transmit the data control information element as part of a beacon transmission.

The controlee communicates a data transfer request, within an RMP 130, which normally precedes an RP 140 within a beacon interval 110. According to one or more embodiments, this may be performed by means of a further information element, which may be referred to as a Data Request Information Element. Thus, the controlee transmits a data request information element during a contention access period, CAP, within the RMP subsequent to the beacon transmission and prior to the RP.

The data request information element 600 may take the format shown in figure 6. In particular it may include a single bit 605 indicating "Reserved for Future Use" RFU 610, and may indicate the direction 640 using another bit 645. The data request information element 600 includes an indication of the number of slots required for data transfer 630, which may be a 5-bit component 635. Finally, the data request information element 600 includes a further bit 625 indicating mode 620 which, similar to that in the data control information element, may be either allocation of deallocation. Allocation acts as an initiation of the data slot or slots allocation in an indeterminate number of subsequent beacon intervals; deallocation acts as a terminator to de-allocate the slot or slots from data transfer, thus freeing them up for additional ranging rounds, until or unless the slots are re-allocated for further initiation of a new uplink or downlink data transfer session.

As already indicated, the data request information element transmission from the controlee to the controller occurs during the ranging management period RMP 530 prior to a ranging period 540, within a beacon interval 510. However, it will be appreciated that this, immediately subsequent, ranging period 540 will not be available for data transfer, since no slots in that beacon interval have been allocated to data transfer and this will not occur until the subsequent beacon interval during which the controller transmits a data control information element 500.

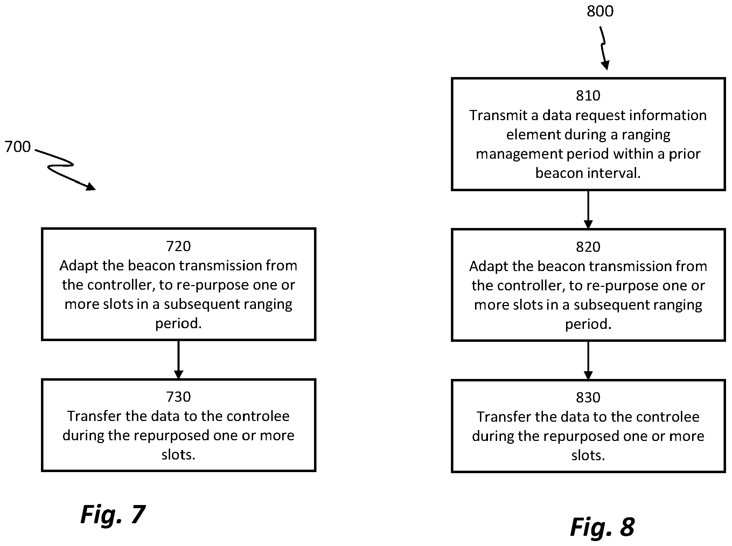

Considering now Figures 7 and 8, figure 7 shows a flow diagram of a method 700 according to one or more embodiments of the present disclosure. In a first step 720, the beacon transmission is modified. In particular according to the method the beacon transmission from the first controller is adapted, to re-purpose one or more slots in a subsequent ranging period, that is to say a ranging period which is subsequent to the beacon transmission. In a second step, data is transferred to the controlee during the repurposed one or more slots. Thus, methods according to figure 7 provides for data transfer from the controller to the controlee. Figure 8 shows a corresponding method 800 providing for the transfer from the controlee to the controller. Steps 820 and 830 of this method correspond to steps 720 and 730 of the previous method; that is to say in step 820 the beacon transmission from the controller is adapted, to repurpose one or more slots in a subsequent ranging period; similarly step 830 comprises transferring the data to the controlee during the repurposed one or more slots. However, as discussed above prior to adapting the beacon transmission, the controller must be made aware that the controlee has data to be transferred. Thus according to the method of figure 8 step 820 is preceded by step 810 in which the controller receives a data request information element during a ranging management, within a beacon interval prior to the beacon transmission of step 820. The data request received by the controller is transmitted by the controlee and received by the controller during a contention access period.

Optionally, the method may include acknowledgement of receipt of the data which is transferred. In particular, a policy may be established in order to determine whether or not acknowledgements of data packets is required, and if so how such acknowledgement should be achieved. For instance, in a first mode, mode 1, acknowledgements may be required immediately. In such embodiments, an acknowledgement frame "ACK" is sent in the same slot AIFS (Acknowledgement Interframe Spacing), following reception of the last symbol of the data frame. A second mode, mode 2, may provide for enhanced acknowledgement, under which the acknowledgement frame "ACK" is sent at a time specified by a predetermined information element (such as a "ACK Timing IE" mentioned below). In a third mode, mode 3, block acknowledgement may be provided wherein the status of reception of multiple individual data frames within the ranging contention free period is indicated by an "Enhanced ACK" frame sent at a time specified by such a predetermined information element. A yet further mode, conveniently referenced or denoted as mode 0, may provide that no acknowledgement is to be sent.

In order to implement such acknowledgement, an acknowledgement timing information element ("ACK Timing IE"). may be introduced. One example of such an information element may consist of an unused single ("RFU"), 5 bits for determining the Acknowledgement timing, and 2 bits to indicate the Acknowledgement policy, for instance in order to determine which of the four above modes are to be applied.

From reading the present disclosure, other variations and modifications will be apparent to the skilled person. Such variations and modifications may involve equivalent and other features which are already known in the art of UWB ranging, and which may be used instead of, or in addition to, features already described herein.

Although the appended claims are directed to particular combinations of features, it should be understood that the scope of the disclosure of the present invention also includes any novel feature or any novel combination of features disclosed herein either explicitly or implicitly or any generalisation thereof, whether or not it relates to the same invention as presently claimed in any claim and whether or not it mitigates any or all of the same technical problems as does the present invention.

Features which are described in the context of separate embodiments may also be provided in combination in a single embodiment. Conversely, various features which are, for brevity, described in the context of a single embodiment, may also be provided separately or in any suitable sub-combination. The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A method for a controller to exchange data with a controlee during ultra-wideband, UWB, ranging having a beacon interval defined by periodic beacon transmissions from the controller, wherein each beacon interval comprises a beacon transmission and a ranging period,
the method comprising:
adapting the beacon transmission from the controller, to repurpose one or more slots in a subsequent ranging period, by
transmitting a data control information element,
and a one of transmitting or receiving the data during the repurposed one or more slots.

2. The method of claim 1, wherein the subsequent ranging period is within the same beacon interval as the beacon transmission.

3. The method of any claim 1 or 2, wherein the data exchange is a data transfer from the controller to the controlee, and the method comprises transmitting the data.

4. The method of any of claim 1 or 2, wherein the data exchange is a data transfer from the controlee to the controller and the method comprises receiving the data, wherein each beacon interval further comprises a ranging management period,
the method further comprising the controller receiving a data request information element during a ranging management period within a prior beacon interval,
wherein the controller transmits the data control information element, during a first beacon transmission subsequent to receiving the data request.

5. The method of claim 4, wherein the ranging management period comprises a contention access period and a contention free period, and the data request information element is received during the contention access period.

6. The method of claim 4 or 5, wherein the data request information element indicates the number of slots required for data transfer.

7. The method of any of claims 4 to 7, wherein the subsequent ranging contention free period is within an immediate subsequent beacon interval.

8. The method of any preceding claim, wherein the data control information element comprises:
an indication of the starting RCFP slot for the data transfer, and
an indication of the number of slots for the data transfer.

9. The method of claim 8 wherein the data control information element further comprises:
an address of the controlee; and
an indication of the direction of the data transfer between the controller and controlee.

10. The method of any preceding claim, further comprising
allocating slots in a ranging contention free period within subsequent beacon intervals, corresponding to the repurposed one or more slots, for transferring data.

11. The method of any preceding claim, further comprising In response to the one of transmitting or receiving the data during the repurposed one or more slots, respectively receiving or transmitting and acknowledgement.

12. A UWB controller configured for ultra-wideband, UWB, ranging during periodic beacon intervals each comprising a beacon transmission and a subsequent ranging period, by transmitting the beacon transmission, and transmitting and receiving ranging communications during the subsequent ranging period, the controller configured to transfer data to a controlee by:
adapting the beacon transmission, to repurpose one or more slots in the subsequent ranging period, and
transferring the data during the repurposed one or more slots.

13. A UWB controller according to claim 12, wherein the controller is configured to adapt the beacon transmission by including a data control information element.

14. A UWB controller according to claim 12 or 13, wherein transferring the data comprises a one of transmitting the data and receiving the data.

15. A UWB controller according to claim 14, wherein transferring the data comprises receiving the data,
wherein the controller is further configured to receive a data request information element during a ranging management period within a prior beacon interval.
